# EUROPÄISCHE PATENTANMELDUNG

(11) **EP 1 710 648 A2**
(43) Veröffentlichungstag der Anmeldung: **11.10.2006**
(21) Anmeldenummer: 06110945.0
(22) Anmeldetag: 10.03.2006
(51) Int. Cl.: G05B 19/418

(54) **Überwachungsvorrichtung sowie Überwachungsverfahren eines Fertigungsprozesses**

(30) Priorität: 19.03.2005 DE 102005012742
(71) Anmelder: B + S Interinvest Holdings S.A., 2530 Luxembourg (LU)
(72) Erfinder: Büyükay, Sinan, 42697 Solingen (DE)
(74) Vertreter: von Kirschbaum, Alexander

(57) **Zusammenfassung**

Eine Überwachungsvorrichtung für die Großproduktion von Bauteilen, insbesondere im Automobilbereich, weist eine Überwachungseinrichtung (24) zur Überwachung des Fertigungsprozesses, beispielsweise eines Schweißprozesses auf. Mit der Uberuvachungseinrichtung (24) ist eine Steuereinrichtung (36) verbunden. Mit einem Fertigteil-Aufnahmebehälter (22) und der Steuereinrichtung (30) ist eine Detektionseinrichtung (34) wie eine Lichtschranke zum Feststellen einer Teilezufuhr in den Fertigteil-Aufnahmebehälter (22) verbunden. Durch die Steuereinrichtung erfolgt ein Sperren des gesamten Fertigteil-Aufnahmebehältcrs, sobald die Überwachungseinrichtung einen Fertigungsfehler meldet und das Fehlteil in den Fertigteil-Aufnahmebehälter (22) gelangt ist, oder sobald eine Soll-Anzahl verketteter Arbeitsfolgen unterschritten wird und das Fehlteil in den Fertigteil-Aufnahmebehälter 22 gelangt ist, oder sobald sich die Anzahl der gefertigten Teile von derjenigen in den Fertigteil-Aufnahmebehälter (22) gelangten Teile unterscheidet.

## Beschreibung

Die Erfindung betrifft eine Überwachungsvorrichtung für die Großproduktion von Bauteilen, insbesondere von Bauteilen für die Automobilindustrie. Ferner betrifft die Erfindung ein entsprechendes Überwachungsverfahren.

In der Großproduktion wird eine Vielzahl von Einzelteilen angefertigt, die sodann in Fertigteil-Aufnahmebehältern, wie in entsprechenden Boxen oder Containern, aufgefangen und gegebenenfalls anschließend gelagert werden. Es handelt sich hierbei beispielsweise um Stanz-, Fräs- und/oder Schweißteile. Derartige Großproduktionen umfassen üblicherweise eine Stückzahl von 50.000 - 4.000.000 pro Jahr. Bei der Großproduktion ist aus Kostengründen von großer Bedeutung, dass die Produktion nicht unterbrochen wird. Dies hat zur Folge, dass übliche Überwachungsvorrichtungen oder Überwachungsverfahren, bei denen die Produktion bei Auftreten eines Fehlers angehalten wird, nicht eingesetzt werden können. Es findet daher häufig nur eine stichprobenartige Überwachung statt. Dies ist jedoch insbesondere bei sicherheitsrelevanten Bauteilen, oder bei Bauteilen, die nach der Montage nur schwer bzw. mit großem Zeitaufwand auswechselbar sind, mit einem erhöhten Sicherheitsrisiko und/oder erhöhtem Kostenaufwand verbunden.

Aufgabe der Erfindung ist es, eine Überwachungsvorrichtung sowie ein Überwachungsverfahren für die Großproduktion von Bauteilen zu schaffen, mit dem auf einfache und kostengünstige Weise eine zuverlässige Produktion sichergestellt werden kann.

Die Lösung der Aufgabe erfolgt erfindungsgemäß durch ein Überwachungsverfahren gemäß Anspruch 1 bzw. eine Überwachungsvorrichtung gemäß Anspruch 6.

Bei dem erfindungsgemäßen Überwachungsverfahren, das insbesondere für die Großproduktion von Bauteilen, insbesondere im Automobilbereich, geeignet ist, erfolgt ein Überwachen des Fertigungsprozesses durch eine Überwachungseinrichtung. Hierbei handelt es sich bei dem Fertigungsprozess insbesondere um in einem Arbeitsgang durchgeführte, verkettete Arbeitsfolgen. Hierbei weist ein Arbeitsgang beispielsweise mehrere Arbeitsfolgen bzw. Arbeitsschritte, wie beispielsweise das Aufschweißen einer bestimmten Anzahl von Muttern auf ein Bauteil, auf. Nach Abschluss dieser verketteten Arbeitsfolgen wird das Fertigteil in einen Fertigteil-Aufnahmebehälter überführt. Zu einem späteren Zeitpunkt kann das Bauteil weiter bearbeitet werden. Bei einem Fertigteil im Sinne der Erfindung handelt es sich somit nicht um ein vollständig fertiges Bauteil, sondern um ein Bauteil, das einen Arbeitsgang, d.h. verkettete Arbeitsfolgen durchlaufen hat, das jedoch ggf. in anderen Arbeitsgängen bearbeitet wird.

Ferner wird bei dem erfindungsgemäßen Überwachungsverfahren die Teilezufuhr zu dem Fertigteil-Aufnahmebehälter durch eine Detektionseinrichtung detektiert. Bei der Detektionseinrichtung kann es sich um eine Lichtschranke oder dgl. handeln.

Erfindungsgemäß erfolgt ein Sperren des Fertigteil-Aufnahmebehälters durch eine mit der Überwachungseinrichtung und mit der Detektionseinrichtung verbundene Steuereinrichtung. Hierbei erfolgt das Sperren erfindungsgemäß auf Grundlage verschiedener Überwachungsmethoden, die vorzugsweise miteinander verknüpft sind.

Bei einer ersten Überwachungsmethode erfolgt ein Sperren des Fertigteil-Aufnahmebehälters, sobald durch die Überwachungseinrichtung ein Fertigungsfehler gemeldet wird und das Fehlteil in den Fertigteil-Aufnahmebehälter gelangt ist. Bei einem Fertigungsfehler kann es sich beispielsweise um die Detektion einer qualitativ schlechten Schweißnaht handeln. Dies wird von der Überwachungseinrichtung festgestellt und ein entsprechendes Signal an die Steuereinrichtung übermittelt. Sobald das detektierte Fehlteil sodann in den Fertigteil-Aufnahmebehälter gelangt und dies von der Detektionseinrichtung an die Steuereinrichtung gemeldet wird, wird der Fertigteil-Aufnahmebehälter gesperrt.

Bei einer besonders bevorzugten alternativen Überwachungsmethode werden von der Überwachungseinrichtung die verketteten Arbeitsfolgen gezählt. Wenn eine Soll-Anzahl der verketteten Arbeitsfolgen unterschritten wird und das Bauteil dennoch in den Fertigteil-Aufnahmebehälter gelangt, erfolgt ebenfalls ein Sperren des Fertigteil-Aufnahmebehälters. Soll beispielsweise eine bestimmte Anzahl von Muttern auf ein Bauteil geschweißt werden, erfolgt durch die Überwachungseinrichtung ein Zählen der Schweißvorgänge. Hierbei wird vorzugsweise, wie später erläutert, ferner überwacht, ob das richtige Bauteil oder überhaupt ein Bauteil, wie die vorgesehene Mutter, angeschweißt wurde. Wird durch die Überwachungseinrichtung eine geringere Anzahl als die Soll-Anzahl an verketteten Arbeitsgängen gezählt und das Bauteil dennoch dem Fertigteil-Aufnahmebehälter zugeführt, so wird dies von der Steuereinrichtung festgestellt und es erfolgt ein Sperren des Fertigteil-Aufnahmebchälters.

Bei einer weiteren Variante der Überwachungsmethode erfolgt ein Sperren des Fertigteil-Aufnahmebehälters, sobald sich die Anzahl der gefertigten Teile von derjenigen in dem Fertigteil-Aufnahmebehälter gelangten Teile unterscheidet. Dies kann durch das Vorsehen von Zählern, die mit Hilfe der Steuereinrichtung verglichen werden, erfolgen, wobei ein erster Zähler die gefertigten Teile und ein weiterer Zähler die in den Fertigteil-Aufnahmebehälter gelangten Teile zählt. Hierbei kann der die gefertigten Teile zählende Zähler jeweils um Eins erhöht werden, wenn die Anzahl der verketteten Arbeitsfolgen erreicht ist.

Vorzugsweise ist jedoch kein gesonderter Zähler erforderlich, der die Anzahl der gefertigten Teile zählt. Vielmehr ist es erfindungsgemäß ausreichend, einen Arbeitsfolgenzähler vorzusehen, der überprüft, ob die Soll-Anzahl der verketteten Arbeitsfolgen, die ggf. auch nur Eins sein kann, durchgeführt wurde. Sollte die Soll-Anzahl der verketteten Arbeitsfolgen noch nicht erreicht sein, jedoch von der Detektionseinrichtung die Zufuhr eines Teils detektiert werden, so kann es sich hierbei beispielsweise auch um ein anderes, von einem Mitarbeiter in den Behälter geworfenes Teil handeln. Erfindungsgemäß relevant ist hierbei, dass diese Diskrepanz von der Steuereinrichtung detektiert wird, da zum Zeitpunkt einer Teilezufuhr in den Fertigteil-Aufnahmebehälter die Soll-Anzahl der verketteten Arbeitsfolgen noch nicht erreicht ist. Dies führt in jedem Fall zum Sperren des Fertigteil-Aufnahmebehälters, unabhängig davon, ob ein anderes Teil beispielsweise durch Hineinwerfen in den Fertigteil-Aufnahmebehälter gelangt ist oder ob eine der verketteten Arbeitsfolgen nicht ausgeführt wurde.

Vorzugsweise wird der die verketteten Arbeitsfolgen zählende Arbeitsfolgenzähler zurückgesetzt. Dies erfolgt sobald eine Teilezufuhr in den Fertigteil-Aufnahmebehälter festgestellt wurde und die Soll-Anzahl der verketteten Arbeitsfolgen erreicht ist. Ggf. kann ein vorzugsweise zusätzlich vorgesehener Teilezähler hierbei um Eins erhöht werden. Dies hat zur Folge, dass der Steuereinrichtung stets die exakte in dem Fertigteil-Aufnahmebehälter vorhandene Teilezahl bekannt ist.

Sofern beim Feststellen einer Teilezufuhr in den Fertigteil-Aufnahmebehälter die Soll-Anzahl von dem Arbeitsfolgenzähler noch nicht erreicht wurde, erfolgt ein Sperren des Fertigteil-Aufnahmebehälters.

Das Sperren des Fertigteil-Aufnahmebehälters erfolgt vorzugsweise derart, dass eine Manipulation durch den Arbeiter, d.h. den die Fertigungsvorrichtung bedienenden Mitarbeiter, nicht möglich ist. Dies kann beispielsweise dadurch erfolgen, dass von der Steuereinrichtung an einen Vorgesetzten eine Mitteilung übermittelt wird und die Fertigung automatisch angehalten wird. Die Fertigung kann sodann nur durch den Vorgesetzten wieder in Gang gesetzt werden, nachdem der gesperrte Fertigteil-Aufnahmebehälter ausgetauscht oder der aufgetretene Fehler beseitigt wurde.

Die Durchführung des erfindungsgemäßen Verfahrens erfolgt vorzugsweise mit Hilfe der nachstehend beschriebenen erfindungsgemäßen Überwachungsvorrichtung.

Die erfindungsgemäße Überwachungsvorrichtung weist eine Überwachungseinrichtung zur Überwachung des Fertigungsprozesses auf. Bei dem Fertigungsprozess handelt es sich beispielsweise um das Schweißen, Stanzen, Fräsen etc. von Kleinteilen. Bei der Überwachungseinrichtung kann es sich auch um eine bekannte Überwachungseinrichtung handeln, die beispielsweise zur Überprüfung der Schweißnahtqualität den Schwcißstrom misst. Ferner weist die erfindungsgemäße Überwachungsvorrichtung einen Fertigteil-Aufnahmebehälter zur Aufnahme der im Fertigungsprozess hergestellten Bauteile auf. Hierbei werden die Bauteile beispielsweise mit Hilfe eines Förderbandes oder dergleichen oder manuell nach Abschluss des Fertigungsprozesses in den Fertigteil-Aufnahmebehälter transportiert.

Der Fertigteil-Aufnahmebehälter ist erfindungsgemäß mit einer Detektionseinrichtung verbunden, durch die eine Teilezufuhr in den Fertigteil-Aufnahmebe-hälter festgestellt wird. Beispielsweise weist die Detektionseinrichtung eine oder mehrere Lichtschranken auf, durch die die Zufuhr eines Bauteils detektiert wird. Erfindungsgemäß sind die Detektionseinrichtung sowie die Überwachungseinrichtung mit einer gemeinsamen Steuereinrichtung verbunden. Mit Hilfe der Steuereinrichtung erfolgt erfindungsgemäß ein Sperren des Fertigteil-Aufnahmebehälters, sobald die Überwachungseinrichtung einen Fertigungsfehler feststellt und diesen an die Steuereinrichtung übermittelt bzw. meldet. Hierbei erfolgt das Sperren des Fertigteil-Aufnahmebehälters sobald das Fertigteil in den Fertigteil-Aufnahmebehälter transportiert wurde. Eine entsprechende Meldung erhält die Steuereinrichtung von der Detektionseinrichtung.

Bei einer alternativen besonders bevorzugten Variante der Erfindung erfolgt ein Sperren des Fertigteil-Aufnahmebehälters sobald eine Soll-Anzahl verketteter Arbeitsfolgen unterschritten wird und das Fertigteil in den Fertigteil-Aufnahmebehälter gelangt ist. Zur Bestimmung der Anzahl der tatsächlich getätigten Arbeitsfolgen ist vorzugsweise ein Arbeitsfolgenzähler vorgesehen, der vorzugsweise mit der Steuereinrichtung verbunden ist. Sofern eine vorgegebene Soll-Anzahl verketteter Arbeitsfolgen nicht erreicht wird, das sodann noch nicht fertige Fehlteil jedoch dem Fertigteil-Aufnahmebehälter zugeführt wird, kann dies von der Steuereinrichtung festgestellt werden, so dass unmittelbar oder zeitnah ein Sperren des Fertigteil-Aufnahmebehälters erfolgt.

Bei einer weiteren alternativen Variante der erfindungsgemäßen Überwachungsvorrichtung erfolgt ein Sperren des Fertigteil-Aufnahmebehälters, sobald sich die Anzahl der gefertigten Teile von derjenigen in den Fertigteil-Aufnahmebehälter gelangten Teile unterscheidet. Insbesondere erfolgt dann ein Sperren, wenn sich in dem Fertigteil-Aufnahmebehälter eine höhere Anzahl von Teilen befindet, als von der Überwachungseinrichtung im Fertigungsprozess wahrgenommen. Dies kann beispielsweise der Fall sein, wenn von einem Mitarbeiter ein beispielsweise von Hand aussortiertes schadhaftes Teil aus Unachtsamkeit oder weil der Mitarbeiter es für ein fehlerfreies Teil hält, in den Fertigteil-Aufnahmebehälter gelegt bzw. geworfen wird. Ferner ist hierdurch vermieden, dass versehentlich oder absichtlich ein anderes Bauteil in den Fertigteil-Aufnahmebehälter gelangt.

Vorzugsweise sind die vorstehend beschriebenen Überwachungsmethoden miteinander verknüpft bzw. werden gleichzeitig von der Steuereinrichtung durchgeführt.

Die Mitteilung zum Sperren eines Fertigteil-Aufnahmebehälters erfolgt vorzugsweise an einen Vorgesetzten, wie einen Meister, wobei nur der Vorgesetzte zum Austausch berechtigt ist. Vorzugsweise erfolgt z.B. mit Hilfe einer der vorstehend beschriebenen Uberwachungsmethoden sobald eine Fehlfunktion festgestellt wurde, ein automatisches Anhalten des Fertigungsprozesses. Um eine hohe Qualität der gefertigten Bauteile sicherzustellen, kann der Fertigungsprozess vorzugsweise nur von einem Meister oder einem anderen Vorgesetzten wieder gestartet werden. Hierdurch sind versehentliche oder vorsätzliche Manipulationen vermieden.

Das Sperren des gesamten Fertigteil-Aufnahmebehälters hat den Vorteil, dass sichergestellt ist, dass ein Fertigteil-Aufnahmebehälter, in dem sich ein nicht ordnungsgemäß hergestelltes Bauteil befindet, vollständig gesperrt wird. Hierdurch ist die Sicherheit erhöht. Ferner ist es produktionstechnisch einfacher, den gesamten Fertigteil-Aufnahmebehälter zu sperren, anstatt ein einzelnes Teil auszusortieren.

Das Sperren des Fertigteil-Aufnahmebehälters erfolgt beispielsweise durch ein automatisches Austauschen und Markieren des Fertigteil-Aufnahmebehälters oder durch eine entsprechende Mitteilung an einen Mitarbeiter, der sodann das Austauschen und/oder Markieren des Fertigteil-Aufnahmebehälters durchführt.

Vorzugsweise weist die erfindungsgemäße Überwachungsvorrichtung einen mit der Überwachungseinrichtung und der Steuereinrichtung verbundenen Arbeitsfolgenzähler und einen mit der Detektionseinrichtung und der Steuereinrichtung verbundenen Teilezähler auf. Erfindungsgemäß erfolgt ein Vergleich der Zählerstände der beiden Zähler. Dies erfolgt vorzugsweise anhand wie des vorstehend beschriebenen Verfahrens erläutert.

Bei einer besonders bevorzugten Ausführungsform wird ein Werkzeughub bzw. eine Werkzeugverschiebung überwacht. Hierbei kann auf einfache Weise die Korrektheit des von dem Werkzeug zurückgelegten Wegs überprüft werden.

Vorzugsweise weist die Überwachungseinrichtung zur Überwachung des Werkzeughubs zwei Sensoreinrichtungen auf. Der Abstand der Sensoreinrichtungen korrespondiert hierbei mit dem Werkzeughub. Beispielsweise muss eine erste der beiden Sensoreinrichtungen, bei denen es sich beispielsweise um optische oder mechanische Schalter handeln kann, ein Signal erzeugen, um die Richtigkeit eines Arbeitsschrittes, beispielsweise das Aufschweißen einer Mutter, festzustellen. Sobald beide Sensoren ein Signal erzeugen, wäre bei diesem Anwendungsbeispiel eine zu kleine oder keine Mutter aufgeschweißt worden. Dementsprechend erfolgt von der Überwachungseinrichtung eine Fehlermeldung an die Steuereinrichtung.

Die Detektionseinrichtung ist vorzugsweise derart ausgebildet, dass die gesamte Öffnung des Fertigteil-Aufnahmebehälters überwacht wird. Hierzu sind beispielsweise mehrere Lichtschranken, insbesondere eine Lichtschranken-Leiste, vorgesehen.

Mit Hilfe des erfindungsgemäßen Überwachungsverfahrens sowie der erfindungsgemäßen Überwachungseinrichtung können insbesondere die Behälter-Füllmengen der Steuereinrichtung vorab übermittelt und von dieser überwacht werden. Auf Grund des Vorsehens eines Teilezählers, der mit der Steuereinrichtung verbunden oder in dieser angeordnet ist, ist die exakte Teileanzahl, die sich in dem Fertigteil-Aufnahmebehälter befindet, bekannt. Die in einem Fertigteil-Aufnahmebehälter vorhandene Stückzahl wird somit nicht über das Gewicht des Behälters, sondern über die tatsächliche Anzahl bestimmt. Dies hat den Vorteil, dass ein Schwanken des Behältergewichts unerheblich ist. Hierdurch ist es möglich, Kosten einzusparen, die ansonsten auf Grund einer stets etwas zu hohen Stückzahl je Aufnahmebehälter entstehen.

Auf Grund der mit Hilfe des erfindungsgemäßen Überwachungsverfahrens sowie der Überwachungseinrichtung erfolgenden Kontrolle jedes einzelnen Bauteils kann eine sehr hohe Sicherheit bei den hergestellten Bauteilen erzielt werden. Dies ist insbesondere bei sicherheitsrelevanten Bauteilen von großer Bedeutung. Auch ist die Anzahl von Kundenreklamationen, beispielsweise die Anzahl der Reklamation eines Automobilherstellers bei einem Zulieferer, erheblich reduziert. Hierdurch können die Kosten weiter gesenkt werden.

Vorzugsweise können die von der Steuereinrichtung ermittelten Daten zur Verschleißanzeige genutzt werden. Hierzu ist beispielsweise die Anzahl der durchgeführten Schweißungen ausschlaggebend, so dass ein entsprechender Wartungszyklus oder ein Teileaustausch regelmäßig unabhängig von Beurteilungen eines Mitarbeiters durchgeführt werden kann.

Besonders bevorzugt ist es, die von der Steuereinrichtung ermittelten Daten zur Produktionsdatenerfassung sowie zur Betriebsdatenerfassung zu nutzen. Hierdurch ist eine fehleranfällige Doppeleingabe von Daten vermieden. Neben den von der Steuereinrichtung ermittelten Stückzahlen können beispielsweise auch geplante oder ungeplante Ausfälle, Stillstandszeiten etc. ermittelt werden.

Nachfolgend wird die Erfindung anhand einer bevorzugten Ausführungsform unter Bezugnahme auf die anliegende Zeichnung näher erläutert.

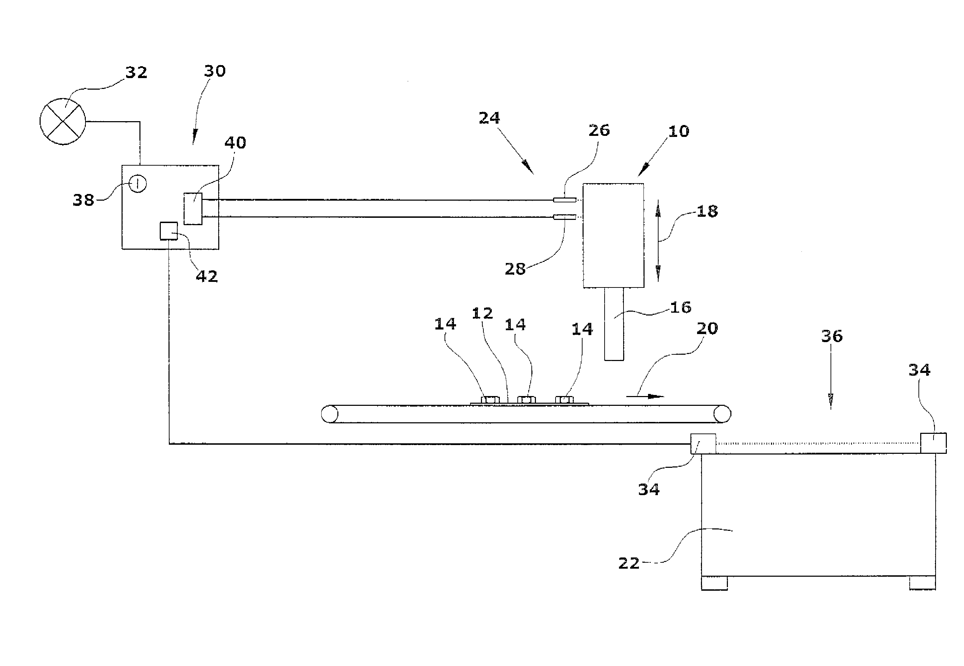

Die Zeichnung zeigt eine schematische Darstellung einer mit einer Fertigungsvorrichtung verbundenen erfindungsgemäßen Überwachungsvorrichtung.

In dem dargestellten Ausführungsbeispiel wird durch eine Herstellungsvorrichtung 10 auf einem Bauteil 12, wie z.B. einem Blechteil 12, Muttern 14 aufgeschweißt. Hierbei werden je Bauteil drei Muttern 14 aufgeschweißt. Hierzu werden die Muttern 14 auf dem Blechteil 12 positioniert und mit Hilfe einer Schweißeinrichtung 16 verschweißt. Hierzu ist die Fertigungseinrichtung 10 zusammen mit der Schweißeinrichtung 16 in Richtung eines Pfeils 18 automatisch oder manuell verschiebbar.

Nach Fertigstellung der drei Schweißungen erfolgt ein Transport des Fertigteils, beispielsweise mit Hilfe eines Förderbandes in Richtung eines Pfeils 20 und wird sodann einem Fertigteil-Aufnahmebehälter 22 zugeführt.

Im dargestellten Ausführungsbeispiel weist eine Überwachungseinrichtung 24 zwei in einem horizontalen Abstand zueinander angeordnete Sensoreinrichtungen 26,28 auf. Durch die Sensoreinrichtung 26 wird bei Bewegung der Fertigungseinrichtung 10 in der Figur nach unten ein Signal überzeugt und beispielsweise unmittelbar an eine Steuereinrichtung 30 übermittelt. Durch die zweite Sensoreinrichtung 28 würde ein Signal erzeugt, sobald die Fertigungseinrichtung 10 weiter als bis zu einer Oberseite der Mutter 14 abgesenkt werden kann. Dies wäre der Fall, wenn die Mutter 14 nicht vorhanden ist oder es sich bei der Mutter 14 um eine Mutter mit einer geringeren Höhe handelt. Hierbei würde von der zweiten Sensoreinrichtung 28 ebenfalls, beispielsweise unmittelbar, ein Signal an die Steuereinrichtung 30 weitergegeben. Durch die Steuereinrichtung erfolgt ein Auswerten der beiden Signale, wobei es sich im dargestellten Ausführungsbeispiel beim Empfang eines Signals von der ersten Sensoreinrichtung 26 und der zweiten Sensoreinrichtung 28 um die Detektion eines Fehlers handelt. Dies würde unmittelbar dazu führen, dass die Steuereinrichtung 30, beispielsweise über eine Signallampe 32 oder eine andere entsprechende Einrichtung, eine Mitteilung an einen Vorgesetzten, wie einen Meister, erzeugt, so dass dieser den betreffenden Fertigteil-Aufnahmebehälter sperrt und durch einen neuen Fertigteil-Aufnahmebehälter ersetzt. Selbstverständlich kann dies auch automatisch erfolgen.

Sobald ein derartiger Fehler oder andere nachstehend beschriebene Sperrkriterien erfüllt sind, erfolgt ein automatisches Anhalten des Fertigungsprozesses. Hierzu wird vorzugsweise von der Steuereinrichtung 30 die Fertigung durch ein entsprechendes Signal bzw. Abschalten der Energiezufuhr unterbrochen. Um Manipulationen zu vermeiden, kann aus Sicherheitsgründen die Fertigung nur von einem Vorgesetzten, wie einem Meister, wieder gestartet werden. Dies kann auf elektronischem Wege beispielsweise durch Eingabe eines Passworts oder durch Vorsehen eines Schlüsselschalters 38 an der Steuereinrichtung 30 erfolgen.

Gegebenenfalls ist zwischen den beiden Sensoreinrichtungen 26,28 und der Steuereinrichtung 30 eine weitere Steuereinrichtung vorgesehen, die die Signale der beiden Sensoreinrichtungen 26,28 verarbeitet und beispielsweise nur bei einem Fertigungsfehler ein Signal an die Steuereinrichtung 30 übermittelt.
Ebenso kann durch diese zwischengeschaltete Steuereinrichtung oder durch einen vorzugsweise in der Steuereinrichtung 30 angeordneten Arbeitsfolgenzähler 40 ein Zählen der Hübe erfolgen, wobei die entsprechende Steuereinrichtung derart programmiert ist, dass ein Bauteil erst nach dem Befestigen von drei Muttern 14 fertiggestellt ist. Würden beispielsweise nur zwei Muttern 14 mit dem Blechteil 12 verschweißt, erfolgt ebenfalls eine Fehlermeldung.

Mit Hilfe des Arbeitsfolgenzählers 40 wird im dargestellten Ausführungsbeispiel gezählt, ob drei Muttern 14 aufgeschweißt wurden. Wie beschrieben, wird nach Durchführung dieser verketteten Arbeitsfolgen das Bauteil in Richtung des Pfeils 20 in den Fertigteil-Aufnahmebehälter 22 transportiert.

Der Fertigteil-Aufnahmebehälter weist eine Detektionseinrichtung auf, die im dargestellten Ausführungsbeispiel mehrere Lichtschranken 34 aufweist. Hierbei können Lichtschranken-Leisten vorgesehen sein, so dass eine Öffnung 36 des Fertigteil-Aufnahmebehälters 22 durch die die Fertigteile in den Fertigteil-Aufnahmebehälter 22 gefördert werden, mit einem Lichtschranken-Leisten überzogen ist.

Mit Hilfe der Detektionseinrichtung 34 erfolgt ein Detektieren von Bauteilen, die in den Behälter 22 gelangen. Hierbei handelt es sich üblicherweise um Fertigteile, die in Richtung des Pfeils 20 nach Fertigstellung durch die Fertigungseinrichtung 10 zu dem Fertigteil-Aufnahmebehälter 22 transportiert werden.

Sofern die Steuereinrichtung 30 bzw. der Teilezähler 42 ein Signal von der Detektionseinrichtung 34 erhält und sich bei der Überprüfung ergibt, dass der Arbeitsfolgenzähler 40 noch nicht den Zählerstand Drei aufweist, erfolgt ein Sperren des Fertigteil-Aufnahmebehälters 22, da somit auf das Bauteil nicht die geforderte Anzahl an Muttern 14 aufgeschweißt wurde.

Ebenso werden aber auch andere in den Fertigteil-Aufnahmebehälter 22 gelangende, beispielsweise hineingeworfene Bauteile, detektiert. Durch jedes von der Detektionseinrichtung detektierte Bauteil wird ein Signal erzeugt, dass von der Detektionseinrichtung 34 an die Steuereinrichtung 30 bzw. den Teilezähler 42 übermittelt wird. Erfindungsgemäß wird wiederum durch die Steuereinrichtung 30 überprüft, ob bei Erhalt des Signals von der Detektionseinrichtung 34 der Arbeitsfolgenzähler 40 bereits auf Drei steht. Dies ist bei einem in den Fortigteil-Aufnahmebehälter 22 gelangenden Fremdteil nicht der Fall, so dass wiederum ein Sperren des Fertigteil-Aufnahmebehälters 22 erfolgt. Hierbei erfolgt das Sperren des Fertigteil-Aufnahmebehälters unmittelbar oder zeitnah.

Sobald die Detektionseinrichtung 34 die Zufuhr eines Teils detektiert, wird ein entsprechendes Signal an die Steuereinrichtung 30 übermittelt. Vorzugsweise weist die Steuereinrichtung 30 einen Teilezähler 42 auf. Selbstverständlich kann der Teilezähler 42 auch zwischen der Detektionseinrichtung 34 und der Steuereinrichtung 30 angeordnet sein. Sobald die Steuereinrichtung 30 bzw. der Teilezähler 42 von der Detektionseinrichtung 34 ein Signal empfängt, überprüft die Steuereinrichtung 30 bei der erfindungsgemäß bevorzugten Überwachungsmethode, ob der Arbeitsfolgenzähler 40 im dargestellten Ausführungsbeispiel den Zählerstand 3 aufweist. Sofern dies der Fall ist, d.h. auf das Bauteil drei Muttern 14 aufgeschweißt wurden, wird der Arbeitsfolgenzähler 40 auf Null zurückgesetzt, und der Teilezähler 42 um Eins erhöht. Anschließend kann die Bearbeitung/ Fertigung des nächsten Bauteils erfolgen.

## Patentansprüche

1. Überwachungsverfahren für die Großproduktion von Bauteilen, insbesondere im Automobilbereich, mit den Schritten:
- Überwachen des Fertigungsprozesses durch eine Überwachungseinrichtung (24),
- Detektieren der Teilezufuhr zu einem Fertigteil-Aufnahmebehälter (22) durch eine Detektionseinrichtung (34) und
- Sperren des Fertigteil-Aufnahmebehälters (22) durch eine mit der Überwachungseinrichtung (24) und mit der Detektionseinrichtung (34) verbundenen Steuereinrichtung (30),
- sobald die Überwachungseinrichtung (24) einen Fertigungsfehler meldet und das Fehlteil in den Fertigteil-Aufnahmebehälter (22) gelangt ist, oder
- sobald eine Soll-Anzahl verketteter Arbeitsfolgen unterschritten wird und das Fehlteil in den Fertigteil-Aufnahmebehälter (22) gelangt ist, oder
- sobald sich die Anzahl der gefertigten Teile von derjenigen in dem Fertigteil-Aufnahmebehälter (22) gelangten Teile unterscheidet.

2. Überwachungsverfahren nach Anspruch 1, bei welchem ein die verketteten Arbeitsfolgen zählender Arbeitsfolgenzähler (40) mit der Überwachungseinrichtung (24) verbunden ist, wobei der Arbeitsfolgenzähler (40) nach dem Feststellen einer Teilezufuhr in den Fertigteil-Aufnahmebehälter (22) zurückgesetzt wird, wenn die Soll-Anzahl der Arbeitsfolgen erreicht ist.

3. Überwachungsverfahren nach Anspruch 1 oder 2, bei welchem der Fertigteil-Aufnahmebehälter (22) gesperrt wird, wenn nach dem Feststellen einer Fertigteilzufuhr in den Fertigteil-Aufnahmebehälter (22) die Soll-Anzahl der verketteten Arbeitsfolgen nicht erreicht ist.

4. Überwachungsverfahren nach Anspruch 2 oder 3, bei welchem ein mit der Detektionseinrichtung (34) verbundene Teilezähler (38) um Eins erhöht wird, wenn der Arbeitsfolgenzähler (40) zurückgesetzt wird.

5. Überwachungsvorrichtung für die Großproduktion von Bauteilen, insbesondere im Automobilbereich, mit
- einer Überwachungseinrichtung (24) zur Überwachung des Fertigungsprozesses,
- einer mit der Überwachungseinrichtung (24) verbundenen Steuereinrichtung (30) und
- einer mit einem Fertigteil-Aufnahmebehälter (22) und der Steuereinrichtung (30) verbundenen Detektionseinrichtung (34) zum Feststellen einer Teilezufuhr in den Fertigteil-Aufnahmebehälter (22),
- wobei die Steuereinrichtung (30) den gesamten Fertigteil-Aufnahmebehäfter (22) sperrt,
- sobald die Überwachungseinrichtung (24) einen Fertigungsfehler meldet und das Fehlteil in den Fertigteil-Aufnahmebehälter (22) gelangt ist, oder
- sobald eine Soll-Anzahl verketteter Arbeitsfolgen unterschritten wird und das Fehlteil in den Fertigteil-Aufnahmebehälter 22 gelangt ist, oder
- sobald sich die Anzahl der gefertigten Teile von derjenigen in dem Fertigteil-Aufnahme-behälter (22) gelangten Teile unterscheidet.

6. Überwachungsvorrichtung nach Anspruch 5, **gekennzeichnet durch** einen mit der Überwachungseinrichtung (24) und der Steuereinrichtung (30) verbundenen Arbeitsfolgenzähler und einen mit der Detektionseinrichtung (34) und der Steuereinrichtung (30) verbundenen Teilezähler, wobei **durch** die Steuereinrichtung (30) ein Vergleich der beiden Zählerstände erfolgt.

7. Überwachungsvorrichtung nach Anspruch 5 oder 6, **dadurch gekennzeichnet, dass** die Überwachungseinrichtung (24) einen Werkzeughub (18) überwacht.

8. Überwachungsvorrichtung nach Anspruch 5, **dadurch gekennzeichnet, dass** die Überwachungseinrichtung (24) zur Überwachung des Werkzeughubs (18) eine erste Sensoreinrichtung (26) und eine zweite Sensoreinrichtung (28) aufweist, deren Abstand mit dem Hub korrespondiert.

9. Überwachungsvorrichtung nach einem der Ansprüche 5 bis 8, **dadurch gekennzeichnet, dass** die Detektoreinrichtung (34) eine Lichtschranke aufweist, die insbesondere die gesamte Öffnung (36) des Fertigteil-Aufnahmebehälters überwacht.
